(19) Europäisches Patentamt
European Patent Office
Office européen des brevets

(11) **EP 2 981 860 B1**

(12) **FASCICULE DE BREVET EUROPEEN**

(45) Date de publication et mention de la délivrance du brevet:
**07.12.2016 Bulletin 2016/49**

(51) Int Cl.:
***G02F 1/01*** *(2006.01)*    ***G02F 1/135*** *(2006.01)*

(21) Numéro de dépôt: **14719057.3**

(22) Date de dépôt: **31.03.2014**

(86) Numéro de dépôt international:
**PCT/FR2014/050756**

(87) Numéro de publication internationale:
**WO 2014/162087 (09.10.2014 Gazette 2014/41)**

(54) **DISPOSITIF POUR LA MISE EN FORME TEMPORELLE EN AMPLITUDE ET EN PHASE D'IMPULSIONS LUMINEUSES ULTRA-BREVES**

VORRICHTUNG ZUR ZEITLICHEN GESTALTUNG DER AMPLITUDE UND PHASE ULTRAKURZER LICHTIMPULSE

DEVICE FOR THE TEMPORAL SHAPING OF THE AMPLITUDE AND PHASE OF ULTRASHORT LIGHT PULSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2013 FR 1353087**

(43) Date de publication de la demande:
**10.02.2016 Bulletin 2016/06**

(73) Titulaire: **Fastlite**
**06560 Valbonne (FR)**

(72) Inventeurs:
• TOURNOIS, Pierre
F-06800 Cagnes sur Mer (FR)
• FORGET, Nicolas
F-91400 Orsay (FR)

(74) Mandataire: **Mazabraud, Xavier**
**Cabinet Moutard**
**35, rue de la Paroisse**
**78000 Versailles (FR)**

(56) Documents cités:
**EP-A2- 0 221 560    EP-A2- 1 160 614**

• PAWEL MOSZCZYNSKI ET AL: "Model for simulation of photo-induced charges inside the hybrid LC cells.", PHOTONICS LETTERS OF POLAND, vol. 5, no. 1, 30 mars 2013 (2013-03-30), XP055093869, DOI: 10.4302/plp.2013.1.05

• VERLUISE F ET AL: "AMPLITUDE AND PHASE CONTROL OF ULTRASHORT PULSES BY USE OF AN ACOUSTO-OPTIC PROGRAMMABLE DISPERSIVE FILTER: PULSE COMPRESSION AND SHAPING", OPTICS LETTERS, THE OPTICAL SOCIETY, vol. 25, no. 8, 15 avril 2000 (2000-04-15), pages 575-577, XP000951947, ISSN: 0146-9592

• SANG-HEE SHIM ET AL: "How to turn your pump-probe instrument into a multidimensional spectrometer: 2D IR and Vis spectroscopies via pulse shaping", PHYSICAL CHEMISTRY CHEMICAL PHYSICS, vol. 11, no. 5, 1 janvier 2009 (2009-01-01), page 748, XP055032771, ISSN: 1463-9076, DOI: 10.1039/b813817f

• Jennifer P Ogilvie ET AL: "Use of coherent control for selective two-photon fluorescence microscopy in live organisms References and links", J. Phys. Chem. A J. Chem. Phys. Science Nature Opt. Express J. Phys. Chem. A, 23 janvier 2006 (2006-01-23), pages 9369-9373, XP055093287, Extrait de l'Internet: URL:http://www.opticsinfobase.org/DirectPDFAccess/311056E8-EA39-AD87-19E42282A914 5554_87573/oe-14-2-759.pdf?da=1&id=87573&seq=0&mobile=no [extrait le 2013-12-13]

EP 2 981 860 B1

- SCHENKEL B ET AL: "Pulse compression with supercontinuum generation in microstructure fibers", JOURNAL OF THE OPTICAL SOCIETY OF AMERICA - B, OPTICAL SOCIETY OF AMERICA, WASHINGTON, US, vol. 22, no. 3, 1 mars 2005 (2005-03-01), pages 687-693, XP002600275, ISSN: 0740-3224
- NICOLAS FORGET ET AL: "Pulse-measurement techniques using a single amplitude and phase spectral shaper", JOURNAL OF THE OPTICAL SOCIETY OF AMERICA B, vol. 27, no. 4, 1 avril 2010 (2010-04-01), pages 742-755, XP055093291, ISSN: 0740-3224, DOI: 10.1364/JOSAB.27.000742
- JOHN HEEBNER ET AL: 'A programmable beam shaping system for tailoring the profile of high fluence laser beams' OPTICAL SENSING II vol. 7842, 13 Octobre 2010, 1000 20TH ST. BELLINGHAM WA 98225-6705 USA, pages 78421C-1 - 78421C-6, XP055285914 DOI: 10.1117/12.867728 ISSN: 0277-786X ISBN: 978-1-62841-971-9

**EP 2 981 860 B1**

**Description**

La présente invention concerne un dispositif pour la mise en forme temporelle en amplitude et en phase d'impulsions lumineuses ultra-brèves.

Ce dispositif s'applique notamment aux impulsions lumineuses ultra-brèves générées par les oscillateurs femto-secondes nécessitant leur mise en forme temporelle en amplitude et en phase.

D'une façon générale, on sait que la mise en forme temporelle en amplitude et en phase des impulsions ultra-brèves générées par les lasers femto-secondes est aujourd'hui réalisée au moyen des filtres acousto-optiques dispersifs programmables (AOPDF pour Acousto-Optic Progammable Dispersive Filters) tels que ceux décrits par D. Kaplan et P. Tournois dans : J. Phys. IV France 12 (2002) Pr 5 -69/75 « Theory and Performance of the Acousto-Optic Programmable Dispersive Filter used for femto-second Laser Pulse Shaping ».

La cadence de répétition de la mise en forme de ces filtres est limitée par le temps de propagation de l'onde acoustique dans la longueur du cristal constituant le filtre. Cette cadence maximale est généralement de l'ordre de 30kHz, ce qui limite l'utilisation de ces filtres acousto-optiques aux impulsions amplifiées des lasers femto-secondes. Pour des cadences supérieures, telles que celles générées par les oscillateurs femto-secondes, qui sont de l'ordre de 80 MHz, ces filtres ne sont pas applicables. Pour réaliser des filtres applicables à ces oscillateurs, il est nécessaire que la réponse impulsionnelle programmable des filtres, qui détermine la mise en forme temporelle des impulsions, soit fixe et non " propagative " comme celle des AOPDFs.

Dans le cas des AOPDFs, la polarisation de l'onde optique polarisée dans un milieu biréfringent, tourne le long de la propagation de celle-ci, en des points différents suivant chacune des fréquences (ou longueurs d'onde) optiques contenues à l'intérieur des impulsions ultra-courtes.

La propagation, avant la rotation de la polarisation, se fait à une vitesse $v_1$ déterminée par l'indice optique $n_1$ du mode de propagation utilisé avant la rotation et, après la rotation de la polarisation, à une vitesse $v_2$ déterminé par l'indice $n_2$ du mode de propagation utilisé après la rotation ; le temps mis par l'onde optique pour parcourir le milieu biréfringent dépend de la longueur d'onde ; la propagation est donc dispersive et programmable ; la rotation de la polarisation est assurée par une onde acoustique transversale programmable envoyée dans le milieu biréfringent. Le document EP 1 160 614 A2 décrit un dispositif pour la mise en forme d'un faisceau ("probe") se propageant dans un guide d'onde solide.

Le but de l'invention est de proposer un dispositif permettant la mise en forme temporelle en amplitude et en phase d'impulsions lumineuses ultra-brèves, selon une réponse impulsionnelle dudit dispositif programmable et fixe.

Le dispositif proposé reprend le principe de fonctionnement des AOPDFs, mais la programmation assurée par une onde acoustique est remplacée par une programmation électro-optique non " propagative ". Le dispositif devient alors un EOPDF pour « Electro-Optic Programmable Dispersive Filter ».

Le milieu biréfringent de propagation n'est plus un solide cristallin comme dans le cas des AOPDFs mais un cristal liquide nématique dont les molécules allongées sont orientées perpendiculairement à la propagation de l'onde optique polarisée. Lorsque les molécules sont alignées parallèlement aux parois du cristal liquide, la polarisation verticale de l'onde optique qui est perpendiculaire aux parois, se propage à une vitesse $v_1$ déterminée par l'indice optique $n_1$ du cristal liquide dans cette direction verticale, tandis que la polarisation parallèle aux parois se propage à une vitesse $v_2$ déterminée par l'indice optique $n_2$ du cristal liquide dans la direction horizontale.

Lorsque les molécules sont alignées perpendiculairement aux parois du cristal liquide, c'est la polarisation horizontale de l'onde optique qui se propage à la vitesse $v_1$ et la polarisation verticale de l'onde optique à la vitesse $v_2$. L'article de J. Heebner "A Programmable Beam Shaping System for Tailoring the Profile of High Fluence Laser Beams ", Proc. of SPIE vol. 7842, dévoile un dispositif de mise en forme utilisant un cristal liquide nématique.

L'invention a pour objet un dispositif pour la mise en forme temporelle en amplitude et en phase d'impulsions ultra-brèves tel que défini dans la revendication 1, comprenant :

- un guide d'onde biréfringent constitué d'un cristal liquide nématique situé entre un matériau photoconducteur et un substrat,
- deux électrodes transparentes situées l'une entre ledit cristal liquide nématique et ledit substrat, et l'autre au-dessus dudit matériau photoconducteur, et
- d'une optique de projection d'un masque optique programmable sur ledit matériau photoconducteur.

Avantageusement, le susdit matériau photoconducteur sera une couche de silicium amorphe $\alpha$-Si:H ou un cristal mixte d'oxyde de bismuth et de silicium (BSO).

Avantageusement, le susdit substrat sera une plaque de verre ou une plaque d'un matériau conducteur.

Avantageusement, le susdit masque optique programmable projeté sur le susdit matériau photoconducteur sera un réseau de traits noirs et blancs à pas variable.

Avantageusement, le susdit réseau à pas variable du masque optique programmable sera constitué de traits gris allant du noir au blanc permettant de réaliser la programmation d'amplitude en plus de la programmation de phase assurée par le pas du masque.

Le dispositif selon l'invention pourra être appliqué à la compression et au codage temporel des impulsions, à hautes cadences, émises par les lasers femto-secondes, tel que décrit par F.Verluise et al. dans : Optics Letters, vol.25, n°8, (2000), p.575-577 « Amplitude and phase control of ultrashort pulses by use of an acousto-optic programmable dispersive filter : pulse compression and shaping ».

Une autre application envisagée du dispositif proposé pourra concerner la génération des impulsions nécessaires à la spectroscopie résolue en temps et à la spectroscopie multidimensionnelle, tels que décrit par Sang-Hee Shim et M. Zanni dans : Phys.Chem.Chem.Phys. n°11 (2009), p. 748-761 « How to turn your pump-probe instrument into a multidimensional spectrometer : 2D IR and Vis spectroscopies via pulse shaping ».

Une autre application envisagée du dispositif proposé pourra concerner la génération des impulsions nécessaires à la microscopie multi-photonique, tel que décrit par Jennifer Ogilvie et al. dans: Optics Express, vol.14, n°2, (2006), p.759-766 « Use of coherent control for selective two-photon fluorescence microscopy in live organisms ».

Une autre application envisagée du dispositif proposé pourra concerner le filtrage et la compression de super-continuum générés par des lasers femto-secondes, tels que décrit par B. Schenkel et al. dans : JOSA-B, vol.22, n°3, (2005), p.687-693 « Pulse Compression with super-continuum generation in microstructure fibers ».

Une autre application envisagée du dispositif proposé pourra concerner l'utilisation dans un appareil de mesure des impulsions ultra-courtes émises par les lasers femtosecondes, tel que celui décrit par N. Forget et al. dans: JOSA-B, vol.27, n°4, (2010), p.742-756 «Pulse Measurement techniques using a single amplitude and phase shaper ».

Un mode de mise en oeuvre d'un dispositif selon l'invention est décrit ci-après, à titre d'exemple non limitatif, avec référence aux dessins annexés dans lesquels :

La figure 1 est une représentation schématique de la structure d'un dispositif selon l'invention ;

La figure 2 est une représentation schématique de la structure du dispositif selon un autre mode de fonctionnement ;

La figure 3 est une représentation schématique du fonctionnement du dispositif selon l'invention avec un masque non incliné et un polariseur en sortie ; et

La figure 4 est une représentation schématique du fonctionnement du dispositif selon l'invention avec un masque incliné et une séparation spatiale du faisceau de sortie.

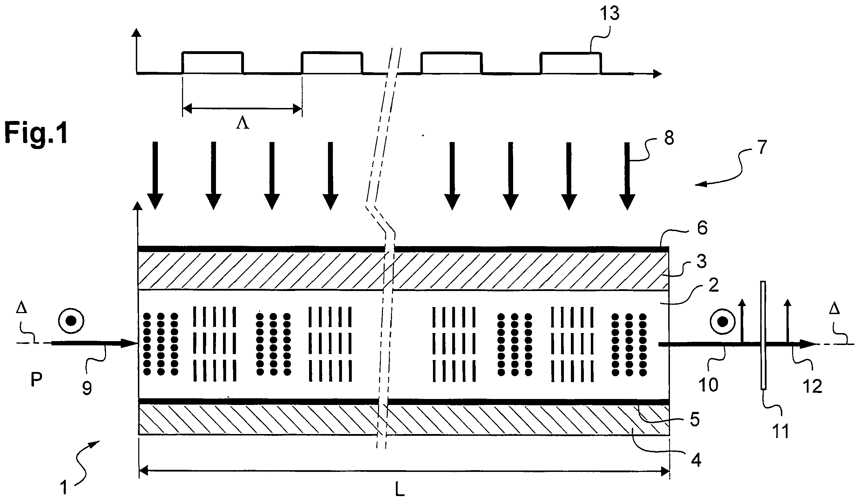

Dans l'exemple représenté sur la figure 1, le dispositif selon l'invention comprend

- un guide d'onde biréfringent 1 d'axe principal $\Delta$ constitué d'un cristal liquide nématique 2 situé entre un matériau photoconducteur 3 de silicium amorphe ($\alpha$-Si:H) ou d'Oxyde mixte de Bismuth et de Silicium (BSO), et un substrat 4,
- deux électrodes transparentes situées l'une 5 entre ledit cristal liquide nématique 2 et ledit substrat 4, et l'autre 6 de sorte que ledit matériau photoconducteur 3 est entre cet autre 6 et ledit cristal nématique 2, et
- d'une optique de projection 7 d'un masque optique programmable 8 constitué de traits noirs et blancs à pas variable A sur ledit matériau photoconducteur 3.

Un faisceau optique 9 est appliqué à l'entrée du guide d'onde biréfringent 1 selon une direction colinéaire à l'axe principal $\Delta$ dudit guide d'onde biréfringent 1 et de polarisation normale d'un plan médian P.

Les variations de tension induites dans le cristal liquide nématique 2 par le matériau photoconducteur 3 font tourner les molécules dans le plan perpendiculaire à la propagation optique située dans le plan P, créant ainsi un couplage entre les modes optiques d'indice $n_1$ et $n_2$.

Pour que l'énergie du mode incident, à une longueur d'onde $\lambda$ donnée du faisceau optique 9, soit transférée dans le mode de sortie à la même longueur d'onde, il faut, lorsque l'axe $\Delta$ du réseau du masque optique 8 projeté est parallèle à l'axe de la propagation optique, que sa période $\Delta$ soit donnée par :

$$\frac{2\pi}{\Lambda} = K = k_1 - k_2 = \frac{2\pi\, n_1}{\lambda} - \frac{2\pi\, n_2}{\lambda} \text{ soit } \Lambda = \frac{\lambda}{|n_1 - n_2|}$$

Pour une longueur d'onde $\lambda$ = 1 $\mu$m et $|n_1-n_2|$ = 0.05, A= 20 $\mu$m.

La durée de programmation T qui correspond à la longueur temporelle de la réponse impulsionnelle du filtre EOPDF est, quant à elle, donnée par :

$$T = \left| n_1 - n_2 \right| \frac{L}{c}$$

L étant la longueur de la propagation dans le cristal liquide et c la vitesse de la lumière dans le vide. Pour une longueur L de 1 cm et $|n_1\text{-}n_2| = 0.05$, T = 1.7 picoseconde.

La polarisation de la lumière dans le mode de sortie du faisceau 10 étant simultanément colinéaire et perpendiculaire à la polarisation de la lumière dans le mode d'entrée du faisceau optique 9, lorsque les deux modes ont le même axe de propagation parallèle à l'axe principal Δ dudit guide d'onde biréfringent 1, il est nécessaire de placer un polariseur 11 à la sortie du dispositif 1 pour sélectionner le mode de sortie constitué par le faisceau de sortie 12 de polarisation perpendiculaire à celle du faisceau optique d'entrée 9, avec le meilleur rapport signal à bruit possible.

L'optique de projection 7 du masque optique programmable 8 est constituée de traits noirs et blancs à pas variable A sur ledit matériau photoconducteur 3. Cette succession de traits noirs et blancs peut être représentée par une succession de créneaux 13 dont la période est A, et permet de réaliser la programmation de phase du faisceau optique 9.

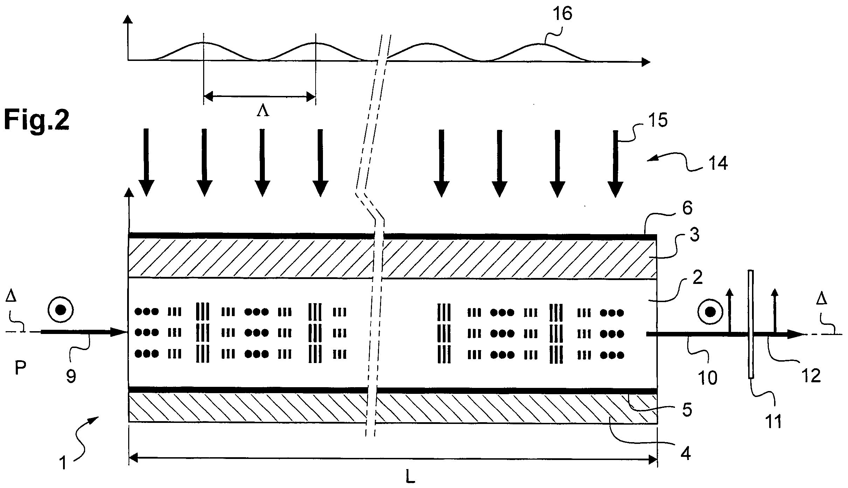

Dans l'exemple représenté sur la figure 2, le dispositif selon l'invention comprend :

- le guide d'onde biréfringent 1 d'axe principal Δ constitué du cristal liquide nématique 2 situé entre le matériau photoconducteur 3 et le substrat 4,
- les deux électrodes transparentes situées l'une 5 entre ledit cristal liquide nématique 2 et ledit substrat 4, et l'autre 6 au-dessus dudit matériau photoconducteur 3, et
- d'une optique de projection 14 d'un masque optique programmable 15 constitué d'une succession de traits noirs puis gris et blancs à pas variable Λ sur ledit matériau photoconducteur 3.

Le faisceau optique 9 est appliqué à l'entrée du guide d'onde biréfringent 1 selon une direction colinéaire à l'axe principal Δ dudit guide d'onde biréfringent 1 et de polarisation normale au plan médian P.

Les variations de tension induites dans le cristal liquide nématique 2 par le matériau photoconducteur 3 font tourner les molécules dans le plan perpendiculaire à la propagation optique située dans le plan P, créant ainsi un couplage entre les modes optiques d'indice ni et $n_2$.

La polarisation de la lumière dans le mode de sortie du faisceau 10 étant simultanément colinéaire et perpendiculaire à la polarisation de la lumière dans le mode d'entrée du faisceau optique 9, lorsque les deux modes ont le même axe de propagation parallèle à l'axe principal Δ dudit guide d'onde biréfringent 1, il est nécessaire de placer un polariseur 11 à la sortie du dispositif 1 pour sélectionner le mode de sortie constitué par le faisceau de sortie 12 de polarisation perpendiculaire à celle du faisceau optique d'entrée 9, avec le meilleur signal à bruit possible.

L'optique de projection 14 du masque optique programmable 15 est constituée de traits noirs puis gris et blancs à pas variable A sur ledit matériau photoconducteur 3.

Cette succession de traits noirs puis gris et blancs peut-être représentée par une succession de sinusoïdes 16 dont la période est A, et permet de réaliser la programmation d'amplitude en plus de la programmation de phase du faisceau optique 9.

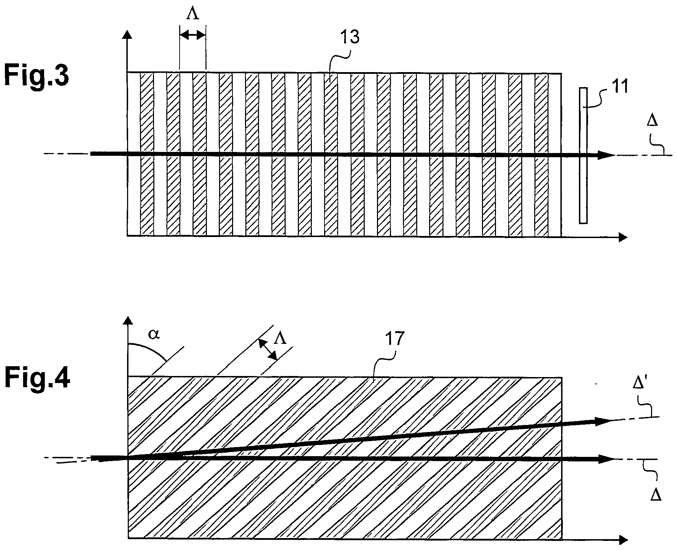

La figure 3 est une représentation schématique du fonctionnement du dispositif selon l'invention avec un masque 13 non incliné par rapport à l'axe Δ et un polariseur en sortie 11.

La figure 4 est une représentation schématique du fonctionnement du dispositif selon l'invention avec un masque incliné 17 et une séparation spatiale du faisceau de sortie.

Pour éviter d'avoir à placer, à la sortie du dispositif 1, un polariseur 11, dont le contraste peut ne pas être parfait, l'axe du réseau de traits pourra être incliné d'un angle α, par rapport à l'axe de la propagation du mode d'entrée parallèle à l'axe principale Δ dudit guide d'onde biréfringent 1.

Dans ces conditions, le pas du réseau est donné par :

$$\Lambda = \frac{\lambda \cos \alpha}{\left| n_1 - n_2 \right|}$$

et l'axe de propagation du mode de sortie Δ' est incliné d'un petit angle θ par rapport à l'axe de propagation du mode d'entrée qui est donné par :

$$\sin\theta = \frac{|n_1 - n_2|}{n_1}\tan\alpha$$

Pour $\lambda$ = 1 $\mu m$, $\alpha$ = 45°, $n_1$ = 1.5 et $|n_1 - n_2|$ = 0.05 : A = 14 $\mu$m et $\theta$ = 2°. Ainsi, pour une longueur d'interaction de 1 cm, l'axe du mode de sortie est déplacé, dans le plan perpendiculaire à la propagation, d'environ 350 $\mu$m par rapport à l'axe du mode d'entrée, ce qui permet de séparer le mode de sortie du mode d'entrée sans avoir recours à un polariseur.

## Revendications

1.  Dispositif pour la mise en forme temporelle en amplitude et en phase d'impulsions lumineuses ultra-brèves, comprenant :

    - un milieu biréfringent (1) de propagation constitué d'un cristal liquide nématique (2) situé entre un matériau photoconducteur (3) et un substrat (4) ;
    - deux électrodes transparentes situées l'une (5) entre ledit cristal liquide nématique (2) et ledit substrat (4), et l'autre (6) de sorte que ledit matériau photoconducteur (3) est situé entre cet autre (6) et ledit cristal liquide nématique (2) ;
    - un masque optique programmable (8,15,13,17) ; et,
    - une optique de projection (7,14) dudit. masque optique programmable (8) sur ledit matériau photoconducteur (3), **caractérisé en ce que** ledit milieu biréfringent de propagation (1) est un guide d'onde d'axe principal ($\Delta$) parallèle à l'axe de propagation optique.

2.  Dispositif selon la revendication 1,
    **caractérisé en ce que** le susdit matériau photoconducteur (3) est une couche de silicium amorphe $\alpha$-Si:H ou un cristal mixte d'oxyde de bismuth et de silicium (BSO).

3.  Dispositif selon la revendication 1,
    **caractérisé en ce que** le susdit substrat (4) est une plaque de verre ou une plaque d'un matériau conducteur.

4.  Dispositif selon la revendication 1,
    **caractérisé en ce que** le susdit masque optique programmable (8,15,13,17) projeté sur le susdit matériau photoconducteur (3) est un réseau (13) de traits noirs et blancs à pas variable.

5.  Dispositif selon la revendication 1,
    **caractérisé en ce que** le susdit masque optique programmable (8,15,13,17) projeté sur le susdit matériau photoconducteur (3) est un réseau (16) de traits gris allant du noir au blanc à pas variable.

6.  Dispositif selon l'une des revendications 4 ou 5,
    **caractérisé en ce que** le susdit réseau (13,16) de traits à pas variable est incliné d'un angle ($\alpha$) par rapport à l'axe ($\Delta$) du susdit guide d'onde biréfringent (1).

7.  Dispositif selon l'une quelconque des revendications précédentes, **caractérisé en ce qu'**il comprend un polariseur (11) situé à la sortie du susdit guide d'onde biréfringent (1).

8.  Utilisation d'un dispositif selon l'une des revendications 1 à 7 pour la compression d'impulsions, à hautes cadences, émises pardes lasers femto-secondes.

9.  Utilisation d'un dispositif selon l'une des revendications 1 à 7 pour la génération d'impulsions nécessaires à la spectroscopie résolue en temps et à la spectroscopie multidimensionnelle.

10. Utilisation d'un dispositif selon l'une des revendications 1 à 7 pour la génération d'impulsions nécessaires à la microscopie multi-photoniques.

11. Utilisation d'un dispositif selon l'une des revendications 1 à 7 pour

le filtrage et la compression de super-continuum générés par des lasers femto-secondes.

12. Procédé permettant l'utilisation dans un appareil de mesure des impulsions ultra-courtes émises par des lasers femto-secondes,
**caractérisé en ce qu'**il utilise un dispositif selon l'une quelconque des revendications 1 à 7.


**Patentansprüche**

1. Vorrichtung für die zeitweilige Formgebung der Amplitude und Phase ultrakurzer Lichtimpulse, umfassend:

- ein doppelbrechendes Medium (1), bestehend aus einem zwischen einem lichtleitenden Material (3) und einem Substrat (4) befindlichen nematischen Flüssigkristall (2);
- zwei transparente Elektroden, eine (5) davon zwischen dem nematischen Flüssigkristall (2) und dem Substrat (4) befindlich und die andere (6) derart, dass sich das lichtleitende Material (3) zwischen dieser anderen (6) und dem nematischen Flüssigkristall (2) befindet;
- eine programmierbare optische Maske (8, 15, 13, 17); und
- eine Projektionsoptik (7, 14) der programmierbaren optischen Maske (8) auf dem lichtleitenden Material (3),

**dadurch gekennzeichnet, dass** das doppelbrechende Medium (1) ein Wellenleiter mit einer Hauptachse ($\Delta$) parallel zur optischen Fortpflanzungsachse ist.

2. Vorrichtung nach Anspruch 1,
**dadurch gekennzeichnet, dass** das lichtleitende Material (3) eine Schicht aus amorphem Silizium $\alpha$-Si:H oder ein Wismutoxid-Silizium-Mischkristall (BSO) ist.

3. Vorrichtung nach Anspruch 1,
**dadurch gekennzeichnet, dass** das Substrat (4) eine Glasplatte oder eine Platte aus einem leitenden Material ist.

4. Vorrichtung nach Anspruch 1,
**dadurch gekennzeichnet, dass** die programmierbare optische Maske (8, 15, 13, 17), die auf das lichtleitende Material (3) projiziert wird, ein Netz (13) aus schwarzen und weißen Strichen mit variablen Abständen ist.

5. Vorrichtung nach Anspruch 1,
**dadurch gekennzeichnet, dass** die programmierbare optische Maske (8, 15, 13, 17), die auf das lichtleitende Material (3) projiziert wird, ein Netz (16) aus grauen Strichen, die von Schwarz bis Weiß reichen, mit variablen Abständen ist.

6. Vorrichtung nach einem der Ansprüche 4 oder 5,
**dadurch gekennzeichnet, dass** das Netz (13, 16) aus Strichen mit variablen Abständen um einen Winkel ($\alpha$) von der Achse ($\Delta$) des doppelbrechenden Wellenleiters (1) geneigt ist.

7. Vorrichtung nach einem der vorhergehenden Ansprüche, **dadurch gekennzeichnet, dass** sie einen Polarisator (11) umfasst, der sich am Ausgang des doppelbrechenden Wellenleiters (1) befindet.

8. Verwendung einer Vorrichtung nach einem der Ansprüche 1 bis 7 für die Komprimierung von Impulsen mit hoher Taktfrequenz, die von Femtosekundenlasern emittiert werden.

9. Verwendung einer Vorrichtung nach einem der Ansprüche 1 bis 7 für die Erzeugung von Impulsen, die für die zeitlich aufgelöste Spektroskopie und die mehrdimensionale Spektroskopie notwendig sind.

10. Verwendung einer Vorrichtung nach einem der Ansprüche 1 bis 7 für die Erzeugung von Impulsen, die für die Mehrphotonenmikroskopie notwendig sind.

11. Verwendung einer Vorrichtung nach einem der Ansprüche 1 bis 7 für die Filterung und Komprimierung eines Superkontinuums, das von Femtosekundenlasern erzeugt wird.

12. Prozess, der die Nutzung von ultrakurzen, von Femtosekundenlasern emittierten Impulsen in einem Messgerät ermöglicht, **dadurch gekennzeichnet, dass** er eine Vorrichtung nach einem der Ansprüche 1 bis 7 nutzt.

**Claims**

1. Device for a temporal shaping of the amplitude and phase of ultrashort light pulses, comprising:

    - a birefringent medium (1) of propagation formed by a nematic liquid crystal (2) located between a photoconductor material (3) and a substrate (4),
    - two transparent electrodes located one (5) between said nematic liquid crystal (2) and said substrate (4), and the other (6) so that said photoconductor material (3) is located between said other (6) and said nematic liquid crystal (2), and
    - a programmable optical mask (8, 15, 13, 17); and
    - projection optics (7, 14) of said programmable optical mask (8) onto said photoconductor material (3),

    **characterized in that** said birefringent medium (1) of propagation is a waveguide (1) with a main axis ($\Delta$) parallel to the optical propagation axis.

2. Device according to claim 1,
   **characterized in that** said photoconductor material (3) is an amorphous silicon layer $\alpha$-Si:H or a mixed bismuth and silicon oxide (BSO) crystal.

3. Device according to claim 1,
   **characterized in that** said substrate (4) is a glass plate or a conductive material plate.

4. Device according to claim 1,
   **characterized in that** said programmable optical mask (8, 15, 13, 17) projected onto said photoconductor material (3) is an array (13) of black and white lines with a variable pitch.

5. Device according to claim 1,
   **characterized in that** said programmable optical mask (8, 15, 13, 17) projected onto said photoconductor material (3) is an array (16) of gray lines ranging from black to white with a variable pitch.

6. Device according to one of the claims 4 or 5,
   **characterized in that** said array (13, 16) of lines with a variable pitch is inclined by an angle ($\alpha$) with respect to the axis ($\Delta$) of said birefringent waveguide (1).

7. Device according to any one of the previous claims,
   **characterized in that** it comprises a polarizer (11) located at the output of said birefringent waveguide (1).

8. Using of a method according to one of the claims 1 to 7 for compression of pulses, at high speed, emitted by femtosecond lasers.

9. Using of a method according to one of the claims 1 to 7 for generating pulses necessary for time-resolved spectroscopy and multidimensional spectroscopy.

10. Using of a method according to one of the claims 1 to 7 for generating pulses necessary for multiphoton microscopy.

11. Using of a method according one of the claims 1 to 7 for super-continuum compression and filtering generated by femtosecond lasers.

12. Method enabling the use in a measurement apparatus of the ultrashort pulses emitted by the femtosecond lasers, **characterized in that** it uses a device according to any one of claims 1 to 7.

**Fig.1**

Fig.3

Fig.4

EP 2 981 860 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1160614 A2

**Littérature non-brevet citée dans la description**

- **D. KAPLAN ; P. TOURNOIS.** Theory and Performance of the Acousto-Optic Programmable Dispersive Filter used for femto-second Laser Pulse Shaping. *J. Phys. IV France,* 2002, vol. 12, 5-69, 75
- **J. HEEBNER.** A Programmable Beam Shaping System for Tailoring the Profile of High Fluence Laser Beams. *Proc. of SPIE,* vol. 7842
- **F.VERLUISE et al.** Amplitude and phase control of ultrashort pulses by use of an acousto-optic programmable dispersive filter : pulse compression and shaping. *Optics Letters,* 2000, vol. 25 (8), 575-577
- **SANG-HEE SHIM ; M. ZANNI.** How to turn your pump-probe instrument into a multidimensional spectrometer : 2D IR and Vis spectroscopies via pulse shaping. *Phys.Chem.Chem.Phys.,* 2009, 748-761
- **JENNIFER OGILVIE et al.** Use of coherent control for selective two-photon fluorescence microscopy in live organisms. *Optics Express,* 2006, vol. 14 (2), 759-766
- **B. SCHENKEL et al.** Pulse Compression with super-continuum generation in microstructure fibers. *JOSA-B,* 2005, vol. 22 (3), 687-693
- **N. FORGET et al.** Pulse Measurement techniques using a single amplitude and phase shaper. *JOSA-B,* 2010, vol. 27 (4), 742-756